# EUROPÄISCHE PATENTSCHRIFT

(11) **EP 0 666 327 B1**
(45) Veröffentlichungstag und Bekanntmachung des Hinweises auf die Patenterteilung: **17.04.2002**
(21) Anmeldenummer: 95810015.8
(22) Anmeldetag: 10.01.1995
(51) Int. Cl.: C22B 7/00, F27D 17/00, C03B 5/235

(54) **Abgasführung für einen Filter-Staub-Schmelzofen**
Waste gas duct for a flue dust melting furnace
Conduite d'évacuation des gaz des fumées pour un four à fusion de poussières

(30) Priorität: 04.02.1994 DE 4403432
(43) Veröffentlichungstag der Anmeldung: 09.08.1995
(73) Patentinhaber: ALSTOM Power K.K., Chuo-ku, Kobe (JP)
(72) Erfinder: Ammon, Hans, CH-5430 Wettingen (CH); Balg, Jürgen, Dr., CH-5415 Nussbaumen (CH); Pfister, Markus, CH-5312 Döttingen (CH)
(74) Vertreter: ABB Patent Attorneys

(56) Entgegenhaltungen:
- WO-A-86/04257
- DE-A- 4 035 049
- CHEMIE INGENIEUR. TECHNIK., Bd.62, Nr.12, , WEINHEIM DE Seiten 1054 - 1055 HIRTH ET AL. 'Ein thermisches Entgiftungsverfahren für Filterstaub aus Müllverbrennungsanlagen.'
- POWER, Bd.131, Nr.10, 7, NEW YORK US Seiten 11 - 18 JASON MAKANSI 'Traditional control processes handle new pollutants'

## Beschreibung

### TECHNISCHES GEBIET

Die Erfindung bezieht sich auf eine Abgasführung für einen Schmelzofen, insbesondere Filterstaub-Schmelzofen, welcher ein Ofengefäss aus Feuerfestmaterial umfasst, das zumindest im Bereich der Ofendecke mit einer Wärmeisolation versehen ist, die im Ofeninneren entstehenden Abgase durch eine Abgasleitung in der Ofendecke nach aussen geführt sind, wobei im Zuge der Abgasleitung eine Quenche zum abrupten Abkühlen des Abgases durch Beaufschlagung mit kalter Quenchluft vorgesehen ist.

Eine Abgasführung dieser Gattung ist in der Firmenschrift "Die thermische Reststoffbehandlung nach dem DEGLOR-Verfahren" der Firma ABB W+E Umwelttechnik, CH-8048 Zürich, undatiert, beschrieben.

### TECHNOLOGISCHER HINTERGRUND UND STAND DER TECHNIK

Beim DEGLOR-Verfahren (DEGLOR ist eine eingetragene Marke der Firma W+E Umwelttechnik AG, CH-8048 Zürich) werden Filterstaub und Kesselasche ohne Zuschlagstoffe in einem elektrisch beheizten Schmelzofen bei Temperaturen um 1300 °C behandelt. Die Reststoffe schmelzen und werden über einen gasdichten Siphon aus dem Ofen ausgetragen und dann abgekühlt. Dabei entsteht ein problemlos deponierbarer glasartiger Rückstand. Während des Einschmelzvorganges dampfen die meisten Schwermetallverbindungen ab. Organische Schadstoffe wie Dioxine oder Furane werden thermisch zerstört. Nicht abdampfende hochsiedende Metallverbindungen werden ähnlich wie Blei in Bleikristallglas in die Glasmatrix eingebunden. Ein dem Ofen nachgeschalteter Ventilator sorgt dafür, dass die abgedampften Komponenten aus dem Ofen abgesaugt werden.

Dieses Abgas wird am Ofenaustritt schlagartig auf Werte um 150 - 200 °C abgekühlt. Die Neubildung von Dioxinen kann so unterbunden werden. Ausserdem kondensieren bzw. desublimieren die im Abgas noch enthaltenen Schwermetallverbindungen. Diese werden anschliessend in einem Schlauchfilter vom Gasstrom getrennt und separat entsorgt. Die nicht kondensierenden Gaskomponenten (CO2, SO2, HCl,...) werden zusammen mit der Quenchluft in den Feuerraum der Müllverbrennung oder in die Rauchgasreinigungsanlage zurückgeführt.

Bis jetzt konnten derartige Anlagen nicht ohne regelmässige Abreinigung des Abgasohres im Bereich zwischen dem Austritt aus dem Schmelzofen und der Stelle, wo die Kaltluft eingeblasen wird (Quenche), betrieben werden. Auch in der Quenche selbst bilden sich kondensatbedingte Ablagerungen. Die Entfernung dieser Ablagerungen ist zeitaufwendig und lässt sich nur mit erheblichem Aufwand automatisieren (CH-PS 677739).

### KURZE DARSTELLUNG DER ERFINDUNG

Der Erfindung liegt die Aufgabe zugrunde, eine Abgasführung für einen Schmelzofen anzugeben, die weitgehend wartungsfrei, technisch einfach und wirtschaftlich zu realisieren ist.

Diese Aufgabe wird erfindungsgemäss dadurch gelöst, dass die Quenche in dem im wesentlichen vertikal verlaufenden Abschnitt der Abgasleitung angeordnet ist und Mittel zur Kühlung der Quenche und des stromabwärts hinter der Quenche gelegenen Abschnitts der Abgasleitung vorgesehen sind.

Der Vorteil der Erfindung ist insbesondere darin zu sehen, dass praktisch alle Schwermetall- und Salzverbindungen unmittelbar beim Verlassen des Ofengefässes im Inneren der Quenche kondensieren. Es bildet sich somit kein teilweise flüssiges Kondensat, was bei einer in horizontaler bzw. nicht ausreichend geneigter Lage angeordneten Abgasführung zu Ansammlungen oder gar Verstopfungen führen könnte.

Bei der Anordnung der Quenche - genauer der Quenchstelle, wo das heisse Abgas mit der kalten Quenchluft in Wechselwirkung tritt - sind generell zwei Ausführungsvarianten möglich. Bei der einen Variante ist die Quenche so weit wie möglich in den Ofeninnenraum verlegt. Bei der anderen Variante schliesst sie sich entweder unmittelbar an die Ofendecke an und erfordert als praktisch keinen Eingriff in die Konstruktion des Ofengefässes, oder die Quenche taucht mehr oder weniger tief in die Ofenisolation ein. In jedem Fall (dieser zweiten Variante) ist dann ein Rohrstück aus keramischen Material vorzusehen, um die Distanz zwischen Ofengefässinneren und der Quenche zu überbrücken.

Durch die vertikale Anordnung der Abgasführung in der Quenche kann flüssiges Kondensat, das sich als dünner Film an der Rohrinnenseite bildet, von selbst durch Einwirkung der Schwerkraft in den Ofen zurückfliessen. Dieses Rückfliessen des flüssigen Kondensats ist bei der zweiten Variante nur dann gewährleistet, wenn das Abgasrohr bis zur Quenche auf einer ausreichende hohen Temperatur gehalten wird, weil sich sonst durch eine zu grosse Abkühlung bedingte feste Ablagerungen oder Krusten bilden.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen Längsschnitt der die Quenche und den sich unmittelbar daran anschliessenden Abschnitt der Abgasleitung;
- Fig.2: einen teilweise vergrösserten Querschnitt durch die Abgasleitung und die Ofendecke gemäss Fig.1 längs deren Linie AA;
- Fig.3: einen vergrösserten Ausschnitt aus Fig.1 im Bereich der Quenchsstelle;
- Fig.4: einen stark vereinfachten Querschnitt durch einen Schmelzofen für Filterrückstände und dessen Abgasführung, wobei die Quenche so direkt am Offeninnenraum angeordnet ist;
- Fig.5: einen stark vereinfachten Querschnitt durch einen Schmelzofen für Filterrückstände und dessen Abgasführung, wobei die Quenche unmittelbar am Aussenmantel des Ofengefässes angeordnet ist.

### WEGE ZUR AUSFÜHRUNG DER ERFINDUNG

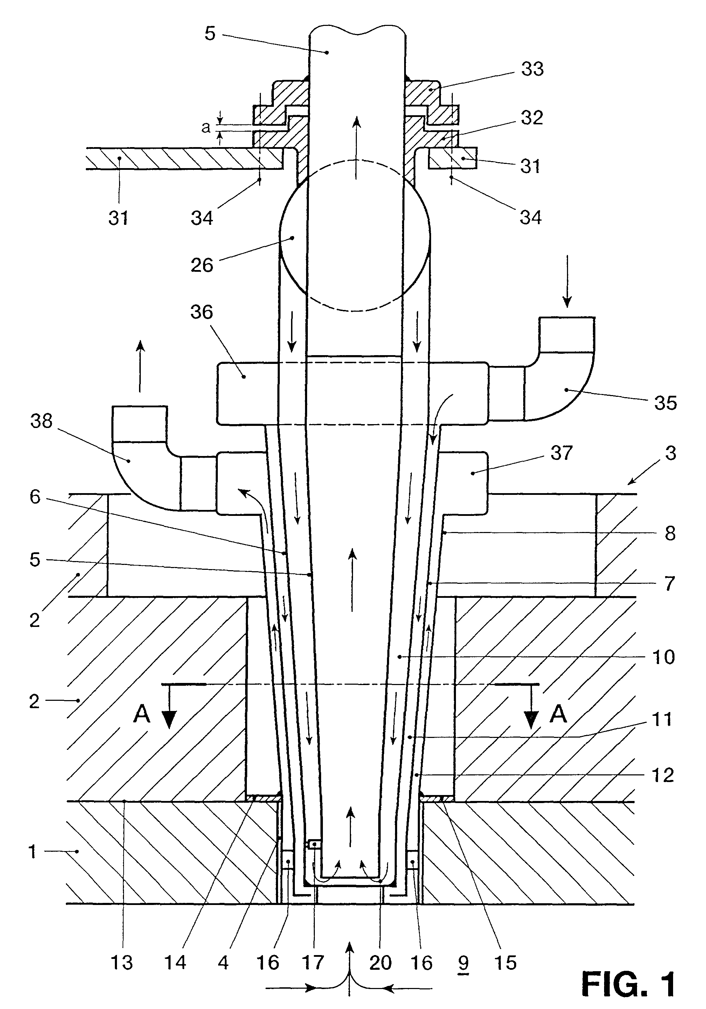

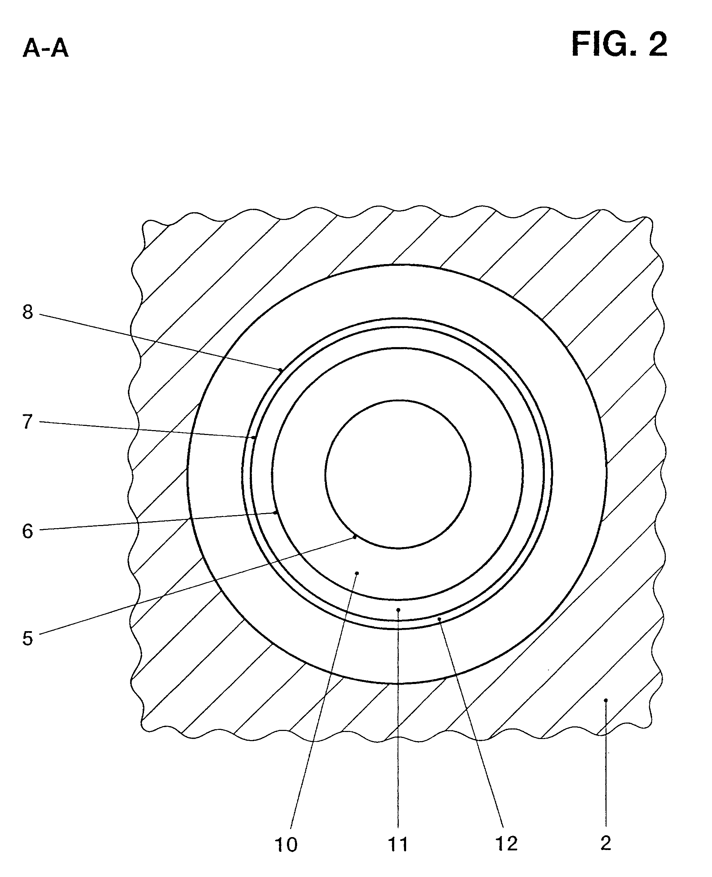

Der Schmelzofen für Filterstaub gemäss Fig.1, 2 und 3 umfasst ein Ofengefäss 1 aus Feuerfestmaterial, dass allseits von einer im Beispielsfall mehrschichtigen thermischen Isolation 2 umgeben ist. Im Bereich der Ofendecke 3 ist eine kreisrunde Oeffnung 4 vorgesehen, die sowohl den Gefässmantel 1 als auch die Isolation 2 durchdringt und sich dabei nach oben hin vorzugsweise stufenförmig erweitert.

In diese Oeffnung 4 taucht eine aus vier koaxialen Rohren 5, 6, 7 und 8 bestehende Konstruktion, im nachfolgenden Quenche bezeichnet, ein. Sie umfasst ein inneres Abgasrohr 5, das sich zum Ofeninnenraum 9 hin verjüngt und bezüglich der Abgasströmung dort einen Diffusor bildet. Das Abgasrohr 5 ist von einem ersten Rohr 6 unter Belassung eines ersten Ringraums 10 beabstandet. Das erste Rohr 6 ist von einem zweiten Rohr 7 koaxial umgeben. Der zweite Ringraum zwischen den beiden Rohren 6 und 7 ist mit 11 bezeichnet. Das zweite Rohr 7 wiederum ist koaxial von einem dritten Rohr 8 umgeben, der zwischen den beiden Rohren 7 und 8 gebildete dritte Ringraum trägt die Bezugsziffer 12. Das dritte Rohr 8 ist auf der Höhe der Trennstelle 13 zwischen Ofengefässdecke 1 und Isolation 2 mit einem Ringflansch 14 versehen, der auf der Ofengefässdecke 1 unter Zwischenschaltung einer Ringdichtung 15 aus hochtemepraturfestem Material aufliegt. Im Bereich der Ofendecke 1 sind zwischen dem zweiten Rohr 7 und dem dritten Rohr 8 erste Distanzelemente 16 vorgesehen. Zweite Distanzelemente 17 sichern die Koaxialität zwischen dem Abgasrohr 5 und dem ersten Rohr 6.

Das zweite Rohr 6 ist am unteren Ende mit einem Ringdeckel 18 teilweise verschlossen, wobei eine kreisrunde Durchtrittsfläche 19 freibleibt, mit einem Durchmesser, der etwa dem Aussendurchmesser des ofenseitigen Endes des Abgasrohres 5 entspricht. Zwischen diesem Ringdeckel 19 und dem besagten Rohrende von 5 verbleibt ein Ringspalt 20, die eigentliche Quenchstelle. Auch das ofenseitige Ende des dritten Rohres 8 ist mit einem Ringdeckel 21 teilweise verschlossen, der eine Durchtrittsfläche 22 freilässt, welche derjenigen im Ringdekkel 18 entspricht. Ein kurzes Rohrstück 23 verbindet die beiden freien Kanten der Ringdeckel 18 und 21. Das ofenseitige Ende 24 des zweiten Rohres 7 ist nach innengezogen und reicht bis auf einen Ringspalt 25 an das besagte Rohrstück 23 heran. Auf diese Weise entsteht eine für den Kühlwasserfluss notwendige freie Verbindung zwischen dem zweiten Ringraum 11 und dem dritten Ringraum 12. Beide Ringräume 11 und 12 sind jedoch gegenüber dem Ofeninneren 9, dem ersten Ringraum 10 und dem Inneren des Abgasrohres 5 abgeschlossen.

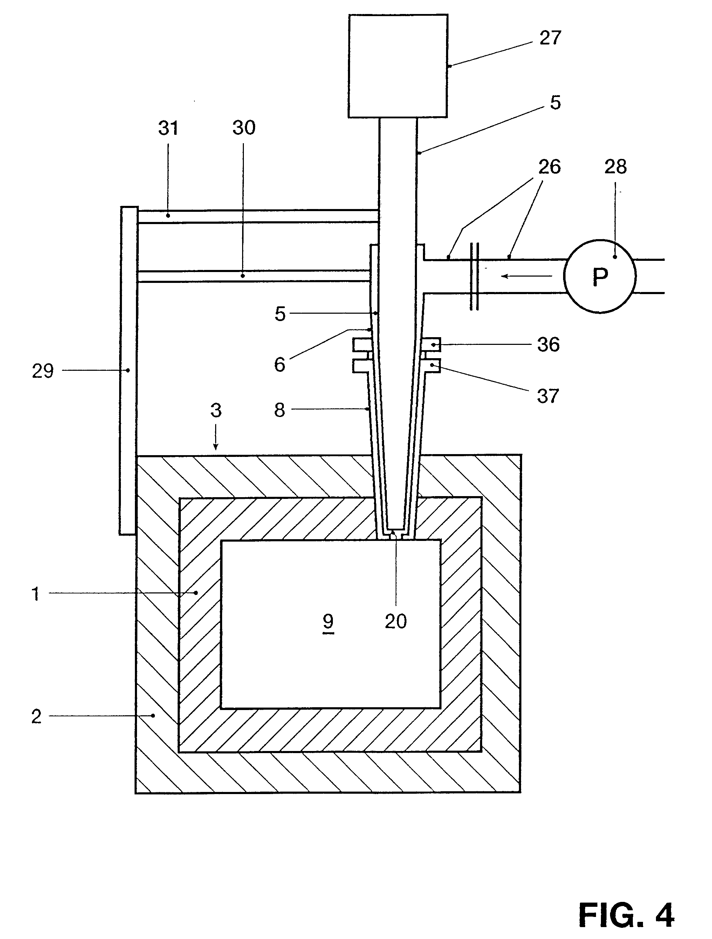

Wie aus Fig.4 in Verbindung mit Fig.1 hervorgeht, wird die (kalte) Quenchluft über eine Frischluftleitung 26 dem ersten Ringraum 10 zugeführt. Diese strömt durch den ersten Ringraum 10 bis zur Quenchstelle (Ringspalt 20), wo sie sich mit dem heissen Abgasstrom aus dem Ofeninneren vermischt und diese schlagartig abkühlt. Die scharfe Eintrittskante am ofenseitigen Ende des Abgasrohres 5 sorgt dabei für zusätzliche Turbulenzen und unterstützt diesen Effekt. Zusammen mit dem sich (in Strömungsrichtung) diffusorartig erweiternden ofenseitigen Endabschnitt des Abgsasrohres 5 wird erreicht, dass sich das im Bereich der Quenche bildende Sublimat der Metalldämpfe nicht an der Rohrinnenseite ablagert und dort anbackt. Die Förderung des Abgases und der Quenchluft erfolgt durch einen Ventilator hinter der Filterstufe 27. Damit jederzeit genügend Frischluft an der Quenchstelle zur Verfügung steht, ist es vorteilhaft, in die Frischluftleitung 26 ein Gebläse 28 zur Druckerhöhung einzubauen. Dieses Gebläse erhöht die Strömungsgeschwindigkeit an der Quenchstelle 20 und erzeugt in diesem Bereich auch stärkere Turbulenzen und erhöht damit die Quenchwirkung.

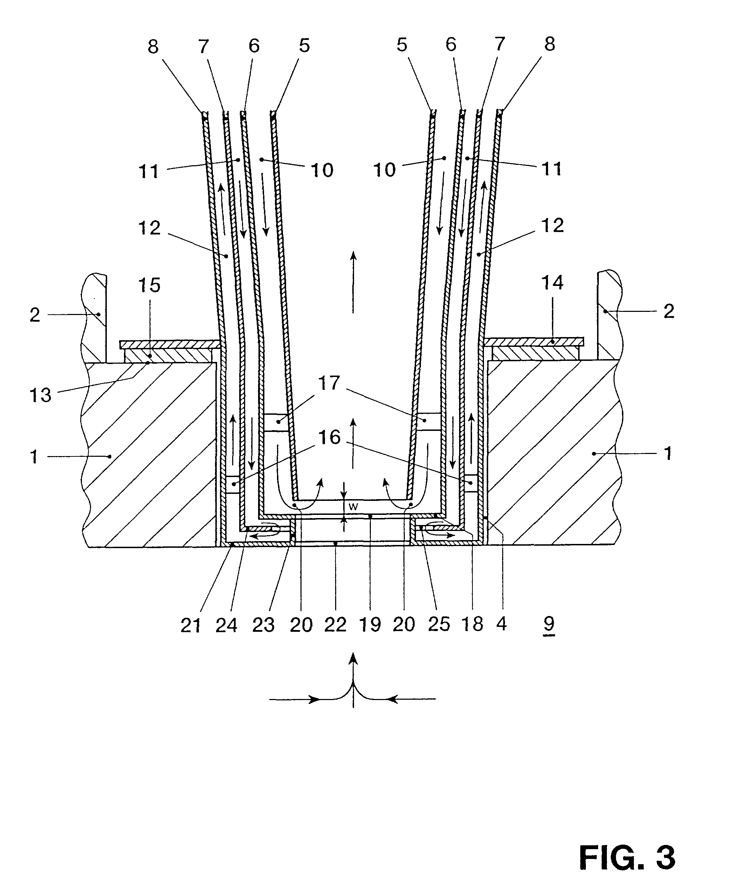

Neben der durch die Quenchstelle (Ringspalt 20) strömenden Frischluftmenge wird die Abgasmischtemperatur und damit auch die Effizienz der Sublimation durch die Spaltweite (Fig.3) des Ringspalts 20 beeinflusst. Um diese den jeweiligen Gegebenheiten anpassen zu können, ist es vorteilhaft, das Abgasrohr 5 gegenüber dem ersten Rohr 6 vertikal verschiebbar auszubilden. Zu diesem Zweck kann die aus einer Tragsäule 29 und Tragarmen 30, 31 bestehende Halterung der Quenche so ausgebildet werden, dass der Tragarm 31 für das Abgasrohr 5 gegenüber dem Tragarm 30 für die anderen Rohre 6,7,8 vertikal einstellbar ist. Eine andere Möglichkeit sieht vor, die Abgasleitung 5 getrennt von den den Rohren 6 und 7 und auch getrennt von der Frischluftleitung 26 zu befestigen. Zu diesem Zweck ist das Abgasrohr 5 auf der Höhe des Tragarms 31 verschiebbar von einem ersten Tragflansch 32 umgeben, der fest mit der Frischlufleitung 26 verbunden und am Tragarm 31 befestigt ist. Das Abgasrohr 5 ist mit einem zweiten Tragflansch 33 verbunden, der über dem ersten Tragflansch 32 liegt. Durch Einstellschrauben 34 und/oder (nicht eingezeichnete Distanzscheiben), die gleichzeitig auch der Befestigung des ersten Tragflansches 32 am Tragarm 31 dienen können, lässt sich der Abstand a zwischen den beiden Flanschen 32 und 33 und damit auch die Spalteweite w an der Quenschstelle (Ringspalt 20) einstellen.

Bei den im Ofeninnenraum 9 herrschenden Temperaturen von 1300°C und mehr werden die regelmässig aus Metall bestehenden Bauteile der Quenche extrem hoch beansprucht. Aus diesem Grunde ist es unumgänglich, diese Bauteile zu kühlen. Dies erfolgt erfindungsgemäss durch Hindurchleiten von Kühlwasser durch die Ringräume 11 und 12 zwischen den Rohren 6, 7 bzw. 7 und 8. Die Zufuhr des Kühlwassers zum Ringraum 12 erfolgt über einen Zulaufstutzen 35, der in eine erste ringförmige Sammelkammer 36 mündet, an die sich der Ringraum 12 anschliesst. Das Kühlwasser durchströmt diesen Ringraum 12 bis hinunter zur Quenchstelle (Ringspalt 20), wird dort umgelenkt, durchströmt den Ringraum 11, gelangt zu einer zweiten ringförmigen Sammelkammer 37 und verlässt diese über einen Ablaufstutzen 38.

Diese Kühlwasserführung verhindert zum einen eine übermässige thermische Belastung der metallischen Bauteile der Quenche gegenüber der von der Isolation 2 und vom Ofengefäss 1 abgestrahlten Wärme. Durch die Führung des Kühlwassers bis zum Ringspalt 20 wird dabei auch die eigentliche Quenchsstelle optimal gekühlt. Das im Ringraum 11 zurückströmende Kühlwasser kühlt das Rohr 6, welche die äussere Begrenzung des Ringraums 10 bildet. Dadurch wird auch eine übermässige Aufheizung der durch den Ringraum 10 strömenden Quenchluft verhindert, so dass auf diese Weise Ablagerungen auf der Innenseite des Abgasrohres 5 vermieden werden.

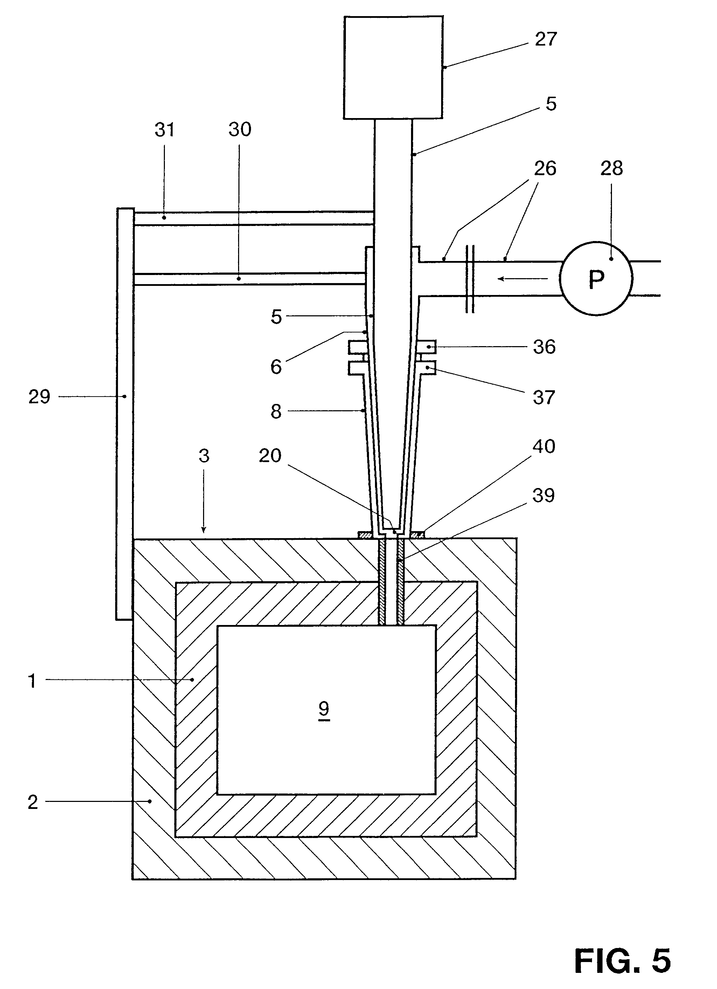

Die Anordnung der eigentlichen Quenchstelle am Austritt der Gase und Dämpfe aus dem Ofeninneren erfordert einen Eingriff in die Ofenkonstruktion im Bereich der Ofendecke. Die erfindungsgemässe Quenche lässt sich jedoch auch bei bestehenden Schmelzofenanlagen nachrüsten, wie dies in Fig.5 veranschaulicht ist. Solche Oefen weisen meist ein die Ofenwandung 1 und die Isolation 2 durchsetzendes Rohr 39 aus hochtemperaturfester Keramik auf. Die Quenche wird nun direkt auf den Aussenmantel der Isolation 2 fluchtend mit dem Keramikrohr 39 aufgesetzt, wobei ein Schutzring 40 zur Abdichtung vorgesehen sein kann. Auch bei dieser Ausführungsform ist analog derjenigen zu Fig.4 eine Tragkonstruktion, bestehend aus Tragsäule 29 und zwei Tragarmen 30, 31 vorgesehen und es sind Mittel zur Veränderung der Spaltweite des Ringspalts 20 analog Fig.1 bzw. 4 vorgesehen.

Die Erfindung ist auf die in der Zeichnung dargestellten Ausführungsformen selbstverständlich nicht beschränkt. So kann die Quenche tiefer in die Isolation 2 hineinreichen, z.B. auf der Höhe der Trennebene zwischen Gefässwand 1 und Isolation 2 liegen. Auch kann die Quenche - sofern es die Platzverhältnisse nicht anders zulassen, auch seitlich am Ofen, imGrenzfall horizontal verlaufend, angeordnet sein.

### BEZEICHNUNGSLISTE

- 1: Ofengefäss
- 2: Isolation
- 3: Ofendecke
- 4: Abgasöffnung
- 5: Abgasrohr
- 6: erstes Rohr
- 7: zweites Rohr
- 8: drittes Rohr
- 9: Ofeninnenraum
- 10: erster Ringraum
- 11: zweiter Ringraum
- 12: dritter Ringraum
- 13: Trennstelle zwischen 1 und 2
- 14: Ringflansch
- 15: Ringdichtung
- 16: erste Distanzelemente
- 17: zweite Distanzelemente
- 18: Ringdeckel
- 19: Durchtrittsfläche in 18
- 20: Ringspalt (Quenchstelle)
- 21: Ringdeckel
- 22: Durchtrittsfläche in 21
- 23: kurzes Rohrstück
- 24: ofenseitiges Ende von 7
- 25: Ringspalt zwischen 7 und 23
- 26: Frischluftleitung
- 27: Filterstufe
- 28: Ventilator
- 29: Tragsäule
- 30,31: Tragarme
- 32,33: Tragflansche
- 34: Schraubenbolzen (Verstellschrauben)
- 35: Zulaufstutzen
- 36,37: Ringkammern
- 38: Ablaufstutzen
- 39: Keramikrohr
- 40: Schutzring

## Patentansprüche

1. Abgasführung für einen Schmelzofen, insbesondere Filterstaub-Schmelzofen, welcher ein Ofengefäss (1) aus Feuerfestmaterial umfasst, das zumindest im Bereich der Ofendecke mit einer Wärmeisolation (2) versehen ist, die im Ofeninneren (9) entstehenden Abgase durch eine Abgasleitung (5) in der Ofendecke nach aussen geführt sind, wobei im Zuge der Abgasleitung eine Quenche (20) zum abrupten Abkühlen des Abgases durch Beaufschlagung mit kalter Quenchluft vorgesehen ist, **dadurch gekennzeichnet, dass** dass die Quenche (20) in dem sich unmittelbar an das Ofengefäss (1) oder dessen Innenraum anschliessenden, im wesentlichen vertikal verlaufenden Abschnitt der Abgasleitung angeordnet ist und Mittel zur Kühlung der Quenche und des stromabwärts hinter der Quenche gelegenen Abschnitts der Abgasleitung vorgesehen sind.

2. Abgasführung nach Anspruch 1, **dadurch gekennzeichnet, dass** die Quenche ein zentrales Abgasrohr (5) umfasst, das von einem ersten (6), zweiten (7) und dritten Rohr (8) unter Belassung dreier Ringräume (10,11,12) umgeben ist, wobei durch den ersten Ringraum (10) zwischen Abgasrohr (5) und ersten Rohr (6) die kalte Quenchluft geführt ist und durch die beiden anderen Ringräume (11,12) eine Kühlflüssigkeit hindurchleitbar ist.

3. Abgasführung nach Anspruch 2, **dadurch gekennzeichnet, dass** der erste Ringraum (10) an seinem ofenseitigen Ende über einen vorzugsweise in seiner Spalteweite (w) einstellbaren Ringspalt (20) mit dem Innenraum des Abgasrohres (5) in Verbindung steht.

4. Abgasführung nach Anspruch 3, **dadurch gekennzeichnet, dass** der zweite (11) und dritte Ringraum (12) bis an den Ringspalt (20) heranreichen und dort miteinander in freier Verbindung stehen.

5. Abgasführung nach Anspruch 3, **dadurch gekennzeichnet, dass** zur Einstellung der Spaltweite (w) das Abgasrohr (5) gegenüber den anderen Rohren (6,7,8) in Rohrlängsrichtung verschiebbar ausgebildet ist.

6. Abgasführung nach einem der Ansprüche 2 bis 5, **dadurch gekennzeichnet, dass** das Abgasrohr (5) zusammen mit den anderen Rohren (6,7,8) zumindest teilweise in die Wärmeisolation (2) des Ofengefässes eintaucht, vorzugsweise bis an die Innenwandung des Ofengefässes (1) heranreichen.

7. Abgasführung nach einem der Ansprüche 2 bis 6, **dadurch gekennzeichnet, dass** sich das Abgasrohr (5) sich in Strömungsrichtung des Abgases diffusorartig erweitert.

8. Abgasführung nach einem der Ansprüche 2 bis 7, **dadurch gekennzeichnet**, Mittel zur Verwirbelung der Quenchluft vorgesehen sind.

## Claims

1. Waste-gas piping for a melting furnace, in particular a filter dust melting furnace, which comprises a furnace vessel (1) which is made of fireproof material and is provided, at least in the region of the furnace top, with a thermal insulation (2), the waste gases occurring in the interior (9) of the furnace being conducted outwards through a waste-gas line (5) in the furnace top, a quench (20) being provided in the course of the waste-gas line for the abrupt cooling of the waste gas by cold quenching air acting upon it, **characterized in that in that** [sic] the quench (20) is arranged in the section of the waste-gas line which directly adjoins the furnace vessel (1), or the interior thereof, and extends essentially vertically, and means are provided to cool the quench and the section of the waste-gas line located downstream after the quench.

2. Waste-gas piping according to Claim 1, **characterized in that** the quench comprises a central waste-gas pipe (5) which is surrounded by a first (6), second (7) and third pipe (8), leaving free three annular spaces (10, 11, 12), the cold quenching air being conducted through the first annular space (10) between the waste-gas pipe (5) and the first pipe (6), and it being possible for a cooling liquid to be guided through the other two annular spaces (11, 12).

3. Waste-gas piping according to Claim 2, **characterized in that** the first annular space (10) communicates, at its furnace-side end, with the interior of the waste-gas pipe (5) via an annular gap (20) which is preferably adjustable in its gap width (w).

4. Waste-gas piping according to Claim 3, **characterized in that** the second (11) and third annular space (12) extend right up to the annular gap (20) and are in free communication with one another there.

5. Waste-gas piping according to Claim 3, **characterized in that** the waste-gas pipe (5) is designed to be displaceable relative to the other pipes (6, 7, 8) in the longitudinal direction of the pipe to adjust the gap width (w).

6. Waste-gas piping according to any of Claims 2 to 5, **characterized in that** the waste-gas pipe (5), together with the other pipes (6, 7, 8), enters at least partially into the thermal insulation (2) of the furnace vessel, preferably extends right up to the inner wall of the furnace vessel (1).

7. Waste-gas piping according to any of Claims 2 to 6, **characterized** [lacuna] the waste-gas pipe (5) widens in the manner of a diffusor in the flow direction of the waste gas.

8. Waste-gas piping according to any of Claims 2 to 7, **characterized** [lacuna] means are provided for swirling the quenching air.

## Revendications

1. Évacuation de gaz de rejet pour un four à fusion, en particulier un four à fusion pour poussières de filtre, qui comprend une enveloppe de four (1) faite en matériau réfractaire, qui est pourvue, tout au moins dans la zone du couvercle de four, dune isolation thermique (2), les gaz de rejet se produisant dans l'intérieur du four (9) étant conduits à l'extérieur grâce à un conduit de gaz de rejet (5) dans le couvercle de four, un dispositif de trempe (20), destiné au refroidissement brusque du gaz de rejet par exposition à de l'air de trempe froid, étant prévu à la suite du conduit de gaz de rejet, **caractérisé en ce que** le dispositif de trempe (20) est disposé dans un tronçon du conduit de gaz de rejet, se prolongeant pour l'essentiel à la verticale, se raccordant au voisinage immédiat de l'enveloppe de four (1)ou de son espace intérieur, et **en ce que** l'on prévoit des moyens destinés au refroidissement du dispositif de trempe et du tronçon du conduit de gaz de rejet situé en amont derrière le dispositif de trempe.

2. Évacuation de gaz de rejet selon la revendication 1, **caractérisé en ce que** le dispositif de trempe comprend un tube central de gaz de rejet (5), qui est entouré d'un premier (6), d'un deuxième (7) et d'un troisième tube (8), en laissant subsister trois espaces annulaires (10, 11, 12), l'air de trempe froid étant conduit à travers le premier espace annulaire (10) entre le tube de gaz de rejet (5) et le premier tube (6), et un liquide de refroidissement pouvant être conduit à travers les deux autres espaces annulaires (11, 12).

3. Évacuation de gaz de rejet selon la revendication 2, **caractérisé en ce que** le premier espace annulaire (10) est en relation avec l'espace interne du tube de gaz de rejet (5) sur son extrémité tournée vers le four, par l'intermédiaire d'une fente annulaire (20), réglable de préférence sur sa largeur de fente (w).

4. Évacuation de gaz de rejet selon la revendication 3, **caractérisé en ce que** le deuxième espace annulaire (11) et le troisième espace annulaire (12) arrivent jusqu'à la fente annulaire (20) et s'y trouvent en relation libre l'un avec l'autre.

5. Évacuation de gaz de rejet selon la revendication 3, **caractérisé en ce qu'**en vue du réglage de la largeur de fente (w), le tube de gaz de rejet (5) est construit de manière à pouvoir être décalé dans la direction longitudinale du tube par rapport aux autres tubes (6, 7, 8).

6. Évacuation de gaz de rejet selon l'une quelconque des revendications 2 à 5, **caractérisé en ce que** le tube de gaz de rejet (5) ainsi que les autres tubes (6, 7, 8) plongent tout au moins partiellement dans l'isolation thermique (2) de l'enveloppe de four, de préférence arrivent jusqu'à la paroi interne de l'enveloppe de four (1).

7. Évacuation selon l'une quelconque des revendications 2 à 6, **caractérisé en ce que** le tube de gaz de rejet (5) s'élargit à la manière d'un diffuseur dans la direction d'écoulement du gaz de rejet.

8. Évacuation selon l'une quelconque des revendications 2 à 7, **caractérisé en ce que** l'on prévoit des moyens destinés au tourbillonnement de l'air de trempe.
